# EUROPÄISCHE PATENTSCHRIFT

(11) **EP 2 538 038 B1**
(45) Veröffentlichungstag und Bekanntmachung des Hinweises auf die Patenterteilung: **17.08.2016**
(21) Anmeldenummer: 12171473.7
(22) Anmeldetag: 11.06.2012
(51) Int. Cl.: F01D 25/24

(54) **Druckgehäuse**
Pressure housing
Carter sous pression

(30) Priorität: 21.06.2011 CH 10462011
(43) Veröffentlichungstag der Anmeldung: 26.12.2012
(73) Patentinhaber: General Electric Technology GmbH, 5400 Baden (CH)
(72) Erfinder: Pauli, Ernst, 8044 Zürich (CH); Rihak, Pavel, 5400 Baden (CH); Balbach, Werner, 5303 Würenlingen (CH); Krautzig, Joachim, 8967 Widen (CH)
(74) Vertreter: Bernotti, Andrea

(56) Entgegenhaltungen:
- DE-A1- 19 850 470
- US-A1- 2003 180 140
- US-B1- 7 198 465

## Beschreibung

### TECHNISCHES GEBIET

Die vorliegende Erfindung bezieht sich auf das Gebiet thermischen Maschinen. Sie betrifft ein Druckgehäuse gemäss dem Oberbegriff des Anspruchs 1.

### STAND DER TECHNIK

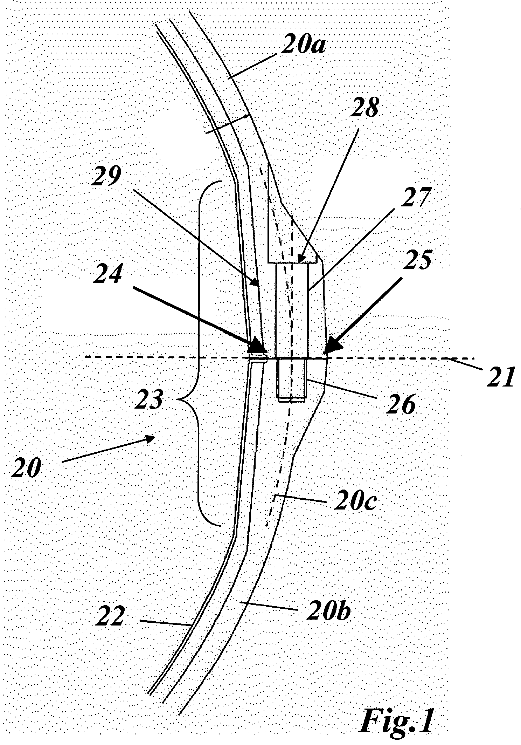

Herkömmliche Flanschverschraubungen für Druckgehäuse von thermischen Maschinen, wie sie in einem Beispiel in Fig. 1 wiedergegeben sind, oder anderen Anlagen mit ähnlichen Anforderungen, haben mehrere Nachteile, die durch die vorliegende Erfindung beseitigt werden sollen. Bei dem bekannten Druckgehäuse 20 aus Fig. 1 werden zwei Gehäuseschalen 20a und 20b über einen Flansch 23 in einer Trennebene 21 druckdicht miteinander verschraubt. Dies geschieht mittels Schraubbolzen, die durch ein Durchgangsloch 27 in der oberen Gehäuseschale 20a in ein Gewindeloch 26 in der unteren Gehäuseschale 20b eingeschraubt werden und sich dabei am Abs. 28 abstützen. Innerhalb der Verschraubung ist in der Trennebene 21 eine Dichtlippe 24 angeordnet, ausserhalb der Verschraubung eine Unterstützungslippe 25. Auf der Innenseite kann eine Abschirmung 22 vorgesehen werden. Aus dieser Anordnung ergeben sich die folgenden Nachteile:
- Während der Aufwärmphase des Druckgehäuses 20 beim Kaltstart erwärmt sich das die Schraubbolzen umgebende Gehäusematerial schneller als der Schaft der Schraubbolzen innerhalb des Durchgangslochs 27, was aufgrund der unterschiedlichen thermischen Ausdehnung von Bolzen und Gehäuse zu einer Überlastung und plastischen Längung der Schraubbolzen mit nachfolgenden lokalen Undichtigkeiten führen kann.
- An stark belasteten Stellen kann es passieren, dass die innen liegende Dichtlippe 24 durch Spannungen in der Gehäusewand geöffnet wird, während die aussen liegende Unterstützungslippe 25 stärker belastet wird, weil das durch die Wand und die Bolzenkräfte erzeugte Moment durch eine höhere Gegenkraft auf die Unterstützungslippe 25 kompensiert werden muss. Folglich kann der notwendige Druck auf die Dichtlippe 24 nicht länger aufrechterhalten werden, und zwar selbst mit grösseren Bolzen nicht, weil sich bei grösser werdendem Bolzendurchmesser die Achse, in der die Bolzenkraft wirkt, weiter von der Dichtlippe 24 entfernt als bei kleineren Bolzen, so dass die Dichtigkeit der Dichtlippe 24 tatsächlich nicht verbessert wird.
- Um ein weiteres Ansteigen der Bolzenbelastung zu vermeiden und die oben beschriebene Situation zu verbessern, werden gemäss Fig. 1 die Bolzen so angeordnet, dass ihre Achsen in der Trennebene 21 der Flanschverbindung die Mittelebene 20c der Gehäusewand (tangential) berühren. Das hat zur Folge, dass die Innenseite des im allgemeinen axialsymmetrischen (teilweise zylindrischen oder konischen) Gehäuses 20 durch eine Abweichung 29 in der Symmetrie gestört ist, was eine spezielle aufwändige Konstruktion, zum Beispiel für die innere Abschirmung 22, erfordert.

Die Druckschrift DE 198 50 470 beschäftigt sich mit dem Problem, bei einem aus wenigstens zwei Gehäuseschalen mittels Verschraubung zusammengesetzten Gehäuse einer Dampfturbine das unterschiedliche Wärmeausdehnungsverhalten der Bolzenschrauben und der Gehäuseflansche zuverlässig zu beherrschen, um insbesondere bei hohen Dampfzuständen eine thermische Überbeanspruchung der Bolzenschrauben mit der Gefahr eines Abrisses derselben zu vermeiden. Zur Lösung dieses Problems wird dort vorgeschlagen, bei einem wenigstens aus zwei Teilschalen zusammengesetzten Gehäuse, welches in einem flanschartigen Teilfugenbereich mit einer Anzahl von Bolzenschrauben zusammengehalten wird, zumindest in exponierten Gehäuseabschnitten jede Bolzenschraube mit Kühldampf zu beaufschlagen. Zu diesem Zwecke werden die Bolzen in Flanschbohrungen eingesetzt, deren Innendurchmesser den Außendurchmesser des Bolzenschaftes derart übersteigt, dass ein Ringraum freibleibt, welcher an seinen gegenüberliegenden Enden Durchgangsbohrungen aufweist, von denen wenigstens eine mit einer Kühldampfquelle verbunden ist. Während des Betriebs der Turbine wird der Ringraum mit Kühldampf beaufschlagt, um die thermische Beanspruchung der Bolzenschrauben in angemessenen Grenzen zu halten. Zumindest die Gefahr einer Öffnung der innenliegenden Dichtlippe aufgrund von Gehäusedeformationen bei transienten Betriebsphasen kann diese Lösung nicht mindern.

In Weiterentwicklung einer solchen Kühlungsanordnung für die Flanschbolzen stellt die Druckschrift WO 03/078799 eine speziell modifizierte Flanschschraube vor, die je nach Betriebserfordernis sehr effizient entweder mit einem Kühl- oder mit einem Heizmittel beaufschlagbar ist. Zu diesem Zwecke ist die Flanschschraube mit wenigstens einer Durchgangsbohrung für das Kühl- bzw. Heizmedium ausgestattet. Diese Lösung ermöglicht eine bessere Beherrschung der Flanschanpresskräfte auch während transienter Betriebsphasen.

Gegenstand der EP 1 091 093 ist ein aus wenigstens zwei Halbschalen flanschlos zusammengesetztes Gehäuse einer Turbomaschine. Zur Erhöhung der Anpresskräfte flanschlos verbundener Gehäuseschalen schlägt diese Lösung die Einführung einer zusätzlichen Hülse aus hochfestem Material in das Bolzenloch vor, wobei diese Hülse von der Gehäusetrennebene aus in das Bolzenloch eingeschraubt wird und die Bolzenschraube sich beim Zusammenpressen der Schalen an der eingeschraubten Hülse abstützt. Diese Lösung dient der Erhöhung der möglichen Anpresskräfte bei flanschlosen zusammengesetzten Gehäusen. Der Problematik unterschiedlichen Wärmeausdehnungsverhaltens der beteiligten Komponenten kann damit aber nicht Rechnung getragen werden.

### DARSTELLUNG DER ERFINDUNG

Es ist daher Aufgabe der Erfindung, ein (teilbares) Druckgehäuse anzugeben, bei welchem die Bolzen der Flanschverbindung einer reduzierten thermischen Belastung ausgesetzt sind.

Die Aufgabe wird durch die Gesamtheit der Merkmale des Anspruchs 1 gelöst. Die Erfindung geht aus von einem Druckgehäuse, welches mehrere Gehäuseschalen umfasst, die in einer Trennebene mittels eines Flansches druckdicht verbindbar sind, wobei die Gehäuseschalen im Bereich des Flansches mittels wenigstens eines sich senkrecht zur Trennebene durch den Flansch erstreckenden Schraubbolzens in der Trennebene dichtend gegeneinander gepresst werden. Sie zeichnet sich dadurch aus, dass der wenigstens eine Schraubbolzen über einen Teil seiner Länge zur Innenseite des Gehäuses hin frei liegt.

Eine Ausgestaltung der Erfindung ist dadurch gekennzeichnet, dass der Flansch auf der Innenseite des Gehäuses eine Ausnehmung aufweist, und dass der wenigstens eine Schraubbolzen durch die Ausnehmung hindurch verläuft.

Insbesondere ist die Ausnehmung derart ausgebildet, dass der wenigstens eine Schraubbolzen in der Ausnehmung über den grössten Teil seiner Länge vollkommen frei liegt.

Eine andere Ausgestaltung der Erfindung zeichnet sich dadurch aus, dass das Gehäuse eine Mittelebene aufweist, und dass der wenigstens eine Schraubbolzen mit seiner Achse tangential zur Mittelebene liegt.

Eine weitere Ausgestaltung ist dadurch gekennzeichnet, dass zwischen den beiden Gehäuseschalen in der Trennebene eine das Gehäuse nach aussen abdichtende Dichtlippe angeordnet ist, und dass der wenigstens eine Schraubbolzen innerhalb der Dichtlippe angeordnet ist.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer Schnittansicht eine Flanschverbindung eines Druckgehäuses nach dem Stand der Technik; und
- Fig. 2: in einer Schnittansicht senkrecht zur Trennebene (Fig. 2(a)) und in der Trennebene (Fig. 2(b)) eine Flanschverbindung eines Druckgehäuses gemäss einem ersten Ausführungsbeispiel der Erfindung.

### WEGE ZUR AUSFÜHRUNG DER ERFINDUNG

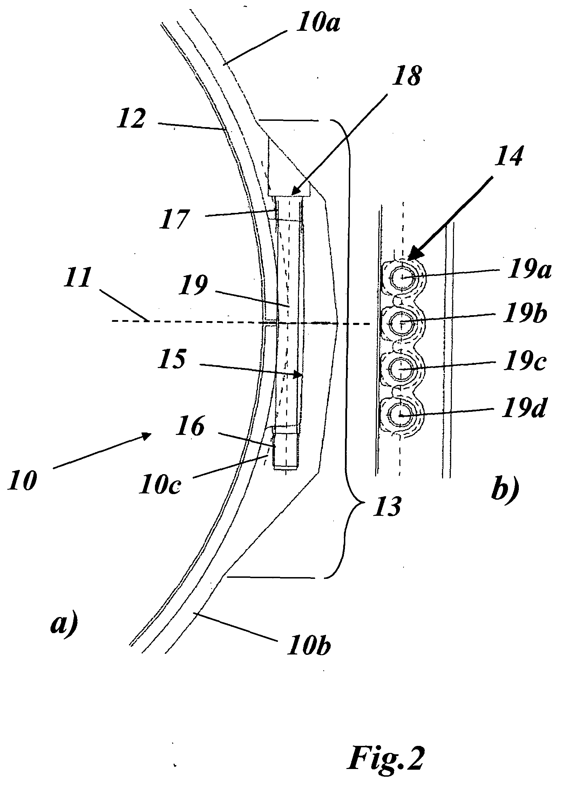

Die oben beschriebenen Nachteile des herkömmlichen Druckgehäuses mit Flanschverbindung werden durch eine Konstruktion beseitigt, wie sie in einem Ausführungsbeispiel der Erfindung in Fig. 2 wiedergegeben ist. Das Druckgehäuse 10 aus Fig. 2 umfasst eine obere Gehäuseschale 10a und eine untere Gehäuseschale 1 Ob, die in einer Trennebene 11 an einem Flansch 13 aneinander stossen und dort druckdicht miteinander verschraubt sind. Die dafür vorgesehenen Schraubbolzen 19 bzw. 19a-d sind nicht in ihrer Gesamtheit in der Figur 2 eingezeichnet, sondern nur angedeutet. Für jeden der Schraubbolzen 19, 19a-d ist im Bereich des Flansches 13 in der oberen Gehäuseschale 10a ein Durchgangsloch 17 mit einem Absatz 18 und in der unteren Gehäuseschale 10b ein damit fluchtendes Gewindeloch 16 vorgesehen. Auf der Innenseite des Gehäuses 10 kann wiederum eine Abschirmung 12 vorgesehen werden. Weiterhin eingezeichnet ist die Mittelebene 10c durch die Gehäusewand.

Der Schraubbolzen 19 wird jeweils von oben durch das Durchgangsloch 17 gesteckt und dann in das Gewindeloch 16 eingeschraubt. Zwischen dem vergleichsweise kurzen Durchgangsloch 17 und dem ebenfalls vergleichsweise kurzen Gewindeloch 16 ist im Flansch 13 eine Ausnehmung 15 vorgesehen derart, dass der eingeschraubte Schraubbolzen 19 über den grössten Teil seiner Länge nicht innerhalb des Flanschmaterials verläuft sondern zum Innenraum des Gehäuses 10 hin offenen liegt und damit den Temperaturen im Innenraum ausgesetzt ist. Die Abdichtung erfolgt ausserhalb der Schraubbolzen 19 bzw. 19a-d durch eine entsprechende Dichtlippe 14, die in Fig. 2(b) in ihrer Ausgestaltung gut zu erkennen ist.

Durch diese Art der Konstruktion ergeben sich die folgenden erfindungsgemässen Vorteile:
- Weil sich die Schäfte der Schraubbolzen 19, 19a-d auf der Innenseite des Gehäuses 10 befinden, erwärmen sie sich schneller als das Gehäuse 10 selbst. Falls nötig, kann das transiente thermische Verhalten der Schraubbolzen dadurch verändert bzw. fein eingestellt werden, dass lokal eine definierte Isolation oder zusätzliche Aufheizung (z.B. mittels einer Leckage in einer Abschirmung oder Isolation) vorgesehen wird.
- Da sich die Achse der Schraubbolzen 19, 19a-d auf der Innenseite der Dichtfläche befinden, führt jeder Zuwachs in den Wandkräften zu einem Zuwachs im Druck auf die Dichtung.
- Wegen der Ausnehmung 15 ist die Axialsymmetrie des Innenraums nicht gestört, selbst wenn die Bolzenachse die Mittelebene 10c in der Trennebene tangiert, was nach wie vor empfehlenswert ist, um Biegekräfte in der Gehäusewand zu vermeiden.

### BEZUGSZEICHENLISTE

- 10,20: Druckgehäuse
- 10a,20a: obere Gehäuseschale
- 10b,20b: untere Gehäuseschale
- 10c,20c: Mittelebene
- 11,21: Trennebene
- 12,22: Abschirmung
- 13,23: Flansch
- 14,24: Dichtlippe
- 15: Ausnehmung
- 16,26: Gewindeloch
- 17,27: Durchgangsloch
- 18,28: Absatz
- 19,19a-d: Schraubbolzen
- 25: Unterstützungslippe
- 29: Abweichung

## Patentansprüche

1. Druckgehäuse (10) für eine thermische Maschine, umfassend wenigstens zwei Gehäuseschalen (10a,b), die in einer Trennebene (11) mittels eines Flansches (13) druckdicht verbindbar sind und wenigstens einen Schraubbolzen (19; 19a-d), wobei die Gehäuseschalen (10a,b) im Bereich des Flansches (13) mittels wenigstens eines sich senkrecht zur Trennebene (11) durch den Flansch (13) erstreckenden Schraubbolzens (19; 19a-d) in der Trennebene (11) dichtend gegeneinander gepresst werden, **dadurch gekennzeichnet, dass** der wenigstens eine Schraubbolzen (19; 19a-d) über einen Teil seiner Länge zur Innenseite des Gehäuses (10) hin frei liegt.

2. Druckgehäuse nach Anspruch 1, **dadurch gekennzeichnet, dass** der Flansch (13) auf der Innenseite des Gehäuses (10) eine Ausnehmung (15) aufweist, und dass der wenigstens eine Schraubbolzen (19; 19a-d) durch die Ausnehmung (15) hindurch verläuft.

3. Druckgehäuse nach Anspruch 2, **dadurch gekennzeichnet, dass** die Ausnehmung (15) derart ausgebildet ist, dass der wenigstens eine Schraubbolzen (19; 19a-d) in der Ausnehmung (15) über den grössten Teil seiner Länge vollkommen frei liegt.

4. Druckgehäuse nach einem der Ansprüche 1-3, **dadurch gekennzeichnet, dass** das Gehäuse (10) eine Mittelebene (10c) aufweist, und dass der wenigstens eine Schraubbolzen (19; 19a-d) mit seiner Achse tangential zur Mittelebene (10c) liegt.

5. Druckgehäuse nach einem der Ansprüche 1-4, **dadurch gekennzeichnet, dass** zwischen den beiden Gehäuseschalen (10a,b) in der Trennebene (11) eine das Gehäuse (10) nach aussen abdichtende Dichtlippe (14) angeordnet ist, und dass der wenigstens eine Schraubbolzen (19; 19a-d) innerhalb der Dichtlippe (14) angeordnet ist.

## Claims

1. Pressure housing (10) for a thermal machine, comprising at least two housing shells (10a,b) which can be connected together pressure-tightly in a separating plane (11) by means of a flange (13), and at least one screw bolt (19; 19a-d), wherein the housing shells (10a,b) in the region of the flange (13) are pressed tightly against each other in the separating plane (11) by means of at least one screw bolt (19; 19a-d) extending through the flange (13) perpendicular to the separating plane (11), **characterized in that** the at least one screw bolt (19; 19a-d) lies freely over part of its length to the inside of the housing (10).

2. Pressure housing according to claim 1, **characterized in that** on the inside of the housing (10), the flange (13) comprises a recess (15), and that at least one screw bolt (19; 19a-d) runs through the recess.

3. Pressure housing according to claim 2, **characterized in that** the recess (15) is configured such that the at least one screw bolt (19; 19a-d) lies completely freely over the majority of its length in the recess (15).

4. Pressure housing according to any of claims 1-3, **characterized in that** the housing (10) has a centre plane (10c), and that the at least one screw bolt (19; 19a-d) lies with its axis tangential to the centre plane (10c).

5. Pressure housing according to any of claims 1-4, **characterized in that** a sealing lip (14), sealing the housing (10) towards the outside, is arranged in the separating plane (11) between the two housing shells (10a, b), and that the at least one screw bolt (19; 19a-d) is arranged inside the sealing lip (14).

## Revendications

1. Boîtier sous pression (10) pour une machine thermique, comprenant au moins deux coques de boîtier (10a, b), qui peuvent être reliées de manière étanche à la pression dans un plan de séparation (11) au moyen d'une bride (13) et au moins une tige filetée (19 ; 19a-d), les coques de boîtier (10a, b) étant comprimées de manière étanche l'une contre l'autre, dans le plan de séparation, au niveau de la bride (13) au moyen d'au moins une tige filetée (19 ; 19a-d) s'étendant perpendiculairement au plan de séparation (11) à travers la bride (13), **caractérisé en ce que** l'au moins une tige filetée (19 ; 19a-d) est libre sur une partie de sa longueur en direction de son côté interne du boîtier (10).

2. Boîtier sous pression selon la revendication 1, **caractérisé en ce que** la bride (13) présente, sur le côté intérieur du boîtier (10), un évidement (15) et **en ce que** l'au moins une tige filetée (19 ; 19a-d) s'étend à travers l'évidement (15).

3. Boîtier sous pression selon la revendication 2, **caractérisé en ce que** l'évidement (15) est conçu de façon à ce que l'au moins une tige filetée (19 ; 19a-d) est entièrement libre dans l'évidement (15) sur la majeure partie de sa longueur.

4. Boîtier sous pression selon l'une des revendications 1 à 3, **caractérisé en ce que** le boîtier (10) comprend un plan central (10c) et **en ce que** l'au moins une tige filetée (19 ; 19a-d) est avec son axe tangentiel par rapport au plan central (10c).

5. Boîtier sous pression selon l'une des revendications 1 à 4, **caractérisé en ce que**, entre les deux coques du boîtier (10a, b), dans le plan de séparation (11), se trouve une lèvre d'étanchéité (14) étanchéifiant le boîtier (10) vers l'extérieur et **en ce que** l'au moins une tige filetée (19 ; 19a-d) se trouve à l'intérieur de la lèvre d'étanchéité (14).
